# FASCICULE DE BREVET EUROPEEN

(11) **EP 2 887 656 B1**
(45) Date de publication et mention de la délivrance du brevet: **06.11.2019**
(21) Numéro de dépôt: 13199041.8
(22) Date de dépôt: 20.12.2013
(51) Int. Cl.: H04N 9/04, H04N 5/369, G02B 5/20

(54) **Méthode pour l'ajustement d'un filtre couleur pour capteur numérique**
Justiermethode eines Farbfilters für einen digitalen Sensor
Method for adjusting a colour filter for a digital sensor

(43) Date de publication de la demande: 24.06.2015
(73) Titulaire: Swiss Timing Ltd., 2606 Corgémont (CH)
(72) Inventeur: Richard, Pascal, 2606 Corgémont (CH); Blondeau, Fabien, 2054 Chézard St-Martin (CH); Müller, Jens Hermann, 04105 Leipzig (DE); Gress, Oliver, 04277 Leipzig (DE)
(74) Mandataire: Goulette, Ludivine

(56) Documents cités:
- EP-A1- 0 516 449
- EP-A1- 0 898 249
- JP-A- S6 477 288
- US-A1- 2007 024 931
- US-A1- 2007 177 236
- "Manual MacFinish 2D 100", , 31 décembre 2012 (2012-12-31), XP55113153, Extrait de l'Internet: URL:http://www.timetronics.be/Manuals/2012 v1 Manual MacFinish 2D 100 English.pdf [extrait le 2014-04-09]

## Description

### Domaine technique

La présente invention concerne une méthode de paramétrage pour un filtre couleur adaptatif comprenant des colonnes de pixels en couleur et des colonnes de pixels blancs pour un capteur numérique matriciel dans le cadre d'une utilisation par une caméra photofinish.

### Etat de la technique

Dans le cadre de la photographie numérique, on connaît depuis longtemps des capteurs photosensibles formés d'une mosaïque de pixels; les capteurs les plus employés pour des caméras numériques utilisent par exemple la technologie CCD (acronyme anglais pour charge-coupled device) ou CMOS (acronyme anglais pour complementary metal oxide semiconductor). Afin de produire des images en couleur, on applique à ces capteurs numériques des filtres couleur, qui se présentent également sous la forme d'une matrice de différentes couleurs, chacune des couleurs étant dédiée à un pixel du capteur auquel elle vient se superposer. La couleur qui doit être associée à chaque pixel sur l'image résultante est ensuite obtenue grâce à des algorithmes de traitement d'image.

Un des filtres couleurs le plus connu et le plus utilisé est le filtre de Bayer, qui est la forme la plus classique de filtre RGB (R pour red, c'est-à-dire rouge, G pour green, c'est-à-dire vert, et enfin B pour blue, c'est-à-dire bleu, ces trois couleurs étant les couleurs de base permettant d'obtenir n'importe quelle autre par combinaison de synthèse additive). Un tel filtre utilise un motif de base couvrant 4 pixels, et qui est répété sur l'ensemble de la surface du capteur, avec deux pixels verts dans des coins opposés complétés par un pixel bleu et un pixel rouge.

Un inconvénient de ce type de filtre couleur est la réduction considérable de la sensibilité du capteur numérique associé en raison de l'atténuation significative de la quantité de lumière qui lui parvient. En effet, une bonne partie des longueurs d'ondes étant absorbées par les différents filtres. Pour ces raisons, différentes variantes du filtre Bayer ont depuis été proposées, en remplaçant notamment l'un des deux pixels verts par un pixel blanc afin d'améliorer la sensibilité du capteur. Le motif de base modifié est dans ce cas également répété sur l'intégralité du filtre.

Dans le domaine des compétitions sportives, on connaît par ailleurs des dispositifs auxiliaires de chronométrage basés sur la reconnaissance d'images, plus connus sous le nom de photo-finish. De tels systèmes permettent à un opérateur de départager des concurrents franchissant une ligne d'arrivée en visionnant des images prises successivement par une caméra haute définition centrée très précisément au niveau de la ligne d'arrivée. L'analyse de la séquence d'images, prises à des instants donnés successifs et correspondant par conséquent à différents temps chronométrés, permet de déterminer en différé, mais toutefois très rapidement après l'arrivée, des temps plus précis du franchissement de la ligne de chaque concurrent, par exemple au millième de seconde et de classer les concurrents de manière fiable.

Les caméras utilisées par des dispositifs de type photo-finish comprennent souvent des capteurs CCD de type Linescan (plus connus sous l'acronyme LS-CCD) dont le débit de capture d'images est encore plus élevé que celui des caméras CCD usuelles, permettant ainsi une résolution temporelle allant jusqu'au dix-millième de seconde. Les premiers capteurs utilisés pour de telles caméras ont présenté une structure matricielle très particulière en forme de barreau, c'est-à-dire une seule colonne de pixels alignée très précisément sur la ligne d'arrivée. Désormais on a plutôt tendance à utiliser des capteurs matriciels standards à deux dimensions, la sélection de la colonne alignée sur la ligne d'arrivée pouvant alors être effectuée par logiciel.

Pour de telles caméras photofinish équipées de capteurs LS-CCD, des filtres du type RGB susmentionné peuvent bien sûr être employés pour obtenir des images couleurs. Néanmoins, ces filtres ne sont pas adaptés pour fournir une qualité adéquate dans tout type de conditions de course. En effet, en fonction par exemple de l'heure du déroulement de la compétition ou des conditions météorologiques, la luminosité ambiante peut fortement varier, et ainsi altérer fortement la qualité des images obtenues. Il en va de même de considérations relatives au type de course, qui conditionnent la vitesse des concurrents en fonction des épreuves et par suite les paramètres de prise de vue, incluant le temps d'exposition.

Il existe par conséquent un besoin pour des caméras photofinish pourvues de filtres couleur pour capteurs numériques exempts de ces limitations connues.

### Bref résumé de l'invention

Le but de la présente invention est de fournir un procédé de réglage pour une caméra photo-finish comprenant un filtre couleur, tel que défini dans la revendication indépendante.

Des formes d'exécution particulières de l'invention sont définies dans les revendications dépendantes.

Un avantage de la présente invention est de permettre d'optimiser en permanence les propriétés optiques de photos couleurs obtenues par le biais du filtre proposé, quelles que soient les conditions d'utilisation.

Un autre avantage de la solution proposée est de permettre une mise en œuvre rapide et efficace de l'ajustement de paramètres optiques choisis pour une prise de vue, et notamment, selon un mode de réalisation préférentiel selon lequel tous les réglages sont effectués par ajustement logiciel, sans nécessiter de mouvement de la caméra photofinish elle-même selon aucun de ses degrés de liberté. Ainsi les réglages fins de l'alignement de la caméra photofinish par rapport à la ligne d'arrivée peuvent être effectués une fois pour toute, les réglages du filtre étant obtenus uniquement par traitement logiciel. Le blocage définitif de tous les degrés de liberté et l'absence de manipulation physique de la caméra photofinish simplifie ainsi considérablement les opérations de réglage tout en permettant de s'adapter à un maximum de types de conditions de course possibles.

### Brève description des figures

Des exemples de mise en œuvre de l'invention avantageux sont indiqués dans la description et illustrés par les figures annexées dans lesquelles:
- la figure 1 illustre respectivement une vue dessus d'une caméra photofinish utilisée dans le cadre de l'invention, alignée sur une ligne d'arrivée;
- la figure 2 illustre un schéma d'un filtre utilisé dans le cadre de l'invention, et différents motifs de base qui peuvent être retenus;
- la figure 3 illustre un schéma les différentes étapes du procédé de réglage d'une caméra photofinish selon un mode de réalisation préférentiel de la présente invention.

### Exemple(s) de modes de réalisation de l'invention

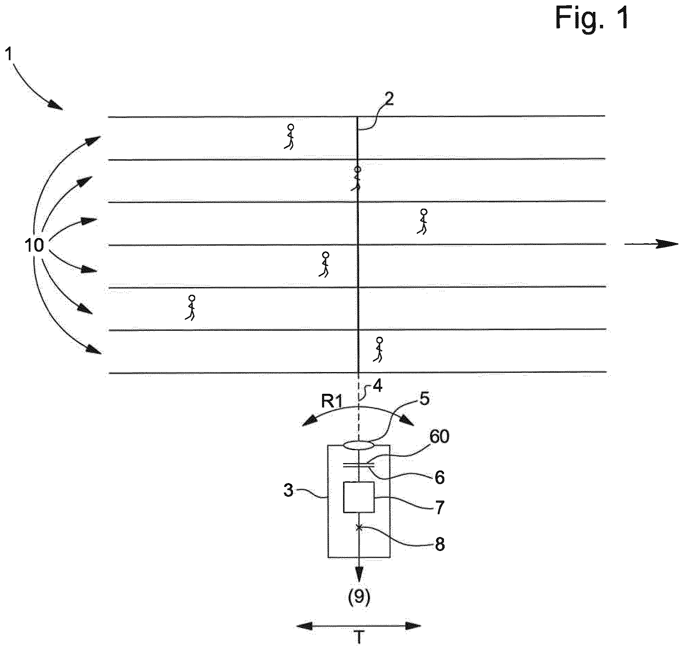

La figure 1 montre un schéma de principe d'une caméra photo-finish utilisée dans le cadre de la présente invention. La caméra photo-finish 3, de préférence LS-CDD, est alignée sur une ligne d'arrivée 2 d'une piste 1 comprenant de préférence plusieurs couloirs 10 dans lesquels évoluent les différents concurrents. On notera que l'exemple d'une piste 1 d'athlétisme est totalement indicatif et non limitative, des caméras photo-finish 3 pouvant être également utilisées dans des courses cyclistes, des courses automobiles sur circuit, ou encore pour des courses de chevaux.

La caméra photo-finish 3 comprend de préférence 4 degrés de liberté, dont trois en rotation et un en translation. Sur la figure 1, seuls le degré de liberté en translation T et un premier degré de liberté en rotation R1 autour d'un axe vertical sont illustrés; néanmoins la caméra est de préférence montée rotative autour d'une rotule 8 qui possède simultanément des deuxième et troisième degrés de liberté en rotation R2,R3 supplémentaires afin de gérer l'alignement de l'axe optique 4 de la caméra 3 sur la ligne d'arrivée 2. La caméra photo-finish 3 comprend un capteur numérique 6 formé d'une matrice de pixels, ainsi qu'un dispositif de traitement d'images 7 fournissant un signal numérique 9 en sortie correspondant à l'image détectée par le capteur. Afin de former des images en couleur, la caméra photo-finish 3 comprend par ailleurs un filtre couleur 60 particulier dont les propriétés optiques peuvent être ajustées selon différents paramètres prédéfinis, discutés plus loin. Selon un mode de réalisation préférentiel, ce filtre couleur 60 est apposé directement sur les pixels du capteur numérique 6, de telle sorte que par abus de langage on parle de pixels également pour le filtre afin de dénommer les différentes couleurs recouvrant un pixel du capteur numérique 6.

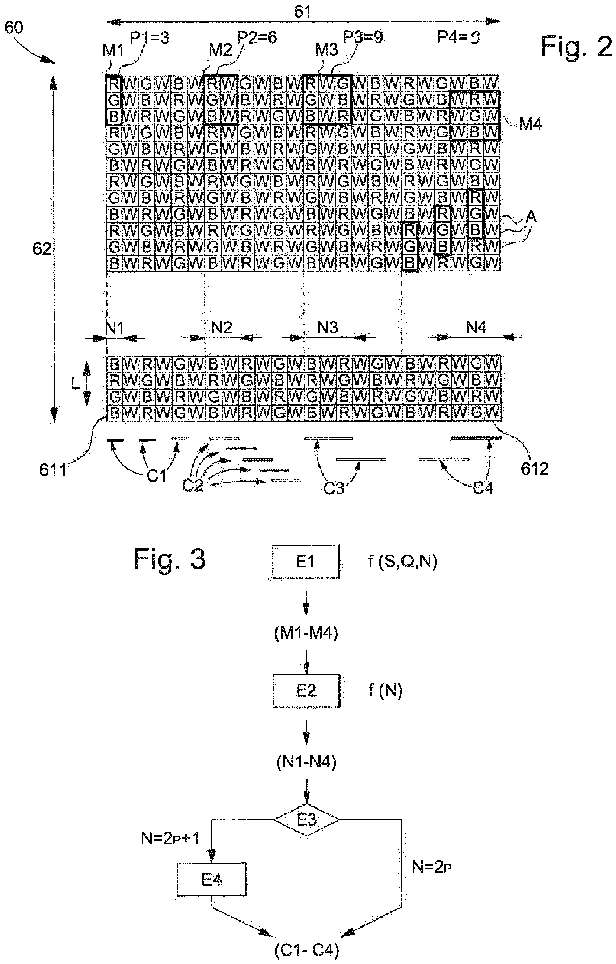

Un tel filtre couleur 60 est illustré par la figure 2. La largeur 61 et la hauteur totale 62 du filtre se comptent en lignes et en colonnes de pixels, qui sont généralement comprises entre 1024 et 2048 pixels. On peut constater que le filtre 60 est formé d'une alternance de premières colonnes 611 de pixels couleurs et de deuxièmes colonnes 612 de pixels blancs W, chaque première colonne 611 étant juxtaposée à une deuxième colonne 612. Une telle configuration d'un filtre couleur 60 par colonnes est particulièrement adaptée pour une caméra photo-finish qui n'utilise qu'au plus quelques colonnes de pixels alignées sur la ligne d'arrivée afin de permettre un estampillage temporel le plus précis possible en associant ces colonnes à un temps donné, tout en maximisant la taille de l'image, dont la hauteur est justement déterminée par le nombre de pixels de la colonne.

Chacune des premières colonnes de pixels 611 comprend une séquence de base A comprenant au moins 3 couleurs différentes, afin de garantir une bonne qualité couleur de l'image obtenue par synthèse additive en se basant uniquement sur celle-ci et en ne requérant aucun autre pixel d'une autre colonne. Selon le mode de réalisation préférentiel illustré, chaque première colonne 611 de pixels couleurs comprend ainsi au moins un pixel bleu B, un pixel vert G et un pixel rouge R. Néanmoins, à titre d'alternative, les couleurs utilisées pourraient également consister en du cyan, du magenta et du jaune.

Sur la figure 2, la séquence de base A est identique pour chaque première colonne 611, à savoir la succession, en partant du haut vers le bas, d'exactement trois pixels: un premier rouge R, un deuxième vert G, et un troisième bleu B. Cette séquence rouge-vert-bleu est donc répétée sur l'intégralité de chacune des premières colonnes couleur 611. Le fait de n'utiliser que trois pixels par séquence permet d'améliorer la qualité couleur Q, qui est modélisée dans le cadre de cette invention comme étant inversement proportionnelle au nombre de lignes de pixels nécessaires pour obtenir l'image couleur, comme expliqué plus loin en détail en relation avec la figure 3. Selon une variante, on pourrait toutefois utiliser une séquence correspondant à un motif de type Bayer modifié où la séquence de base répétée sur chaque première colonne 611 serait la succession de quatre pixels au lieu de trois, à savoir: un vert G, un bleu B, puis un autre vert G et enfin un rouge R. Cette variante de séquence de base serait avantageuse en termes de sensibilité, car la couleur verte n'est pas aussi absorbante que le bleu et le rouge. Néanmoins, une telle amélioration se ferait au détriment de la qualité couleur, puisqu'il faudrait utiliser 4 lignes de pixels au lieu de trois. Par ailleurs, le fait d'avoir des séquences identiques pour chaque séquence de base A de chaque colonne permet de limiter le nombre de colonnes nécessaires pour former des motifs de base, et ainsi maximiser la résolution de l'image.

Comme on peut le constater sur la figure 2, l'agencement des séquences de base A n'est toutefois pas exactement identique pour chaque première colonne 611 de pixels de couleur. En effet on peut remarquer que chaque ligne de pixels présente la même séquence d'une suite de pixels formée d'un rouge R, d'un vert G, puis d'un bleu, comme pour chaque première colonne 611 de pixels couleur, avec simplement des pixels blancs W intercalés. De telles propriétés de symétrie sont obtenues grâce au décalage de chaque séquence de base A en hauteur d'un pixel d'une première colonne 61 de pixels de couleur à la suivante. Autrement dit, si pour une ligne de pixels donnée, le pixel d'une première colonne 611 de pixels de couleur est d'une certaine couleur, par exemple rouge, le pixel de la même couleur se retrouvera par exemple une ligne plus haut ou plus bas, sur la première colonne 611 de pixels suivante et une ligne plus bas - ou respectivement plus haut - sur la première colonne 611 de pixels de couleur précédente. Selon le mode de réalisation préférentiel illustré - voir sur la droite de la figure 2 - les séquences de base sont décalées d'un pixel vers le haut en scannant les colonnes de pixel de couleur une par une de la gauche vers la droite. Par conséquent seules les premières colonnes 611 de pixels de couleur « modulo 3 » sont exactement les mêmes, en prenant une formulation arithmétique, c'est-à-dire que seules les première, quatrième, septième, dixième etc. premières colonnes 611 de pixel couleur sont identiques, de même que les deuxième, cinquième, huitième etc. et les troisième, sixième, neuvième, etc. C'est la raison pour laquelle des pointillés ont été tracés pour matérialiser une ligne de démarcation fictive de réplication exacte du motif de 6 colonnes qui est effectivement répété sur l'ensemble du filtre 60. Les propriétés optiques avantageuses d'un tel décalage des séquences de base A ont été vérifiées empiriquement par rapport à des filtres pour lesquels l'ensemble des lignes sont de couleur identique. En effet, outre les considérations de symétrie évidentes des lignes par rapport aux colonnes sur l'ensemble du filtre couleur 60, un tel agencement facilite la détermination de couleur pour chaque pixel par calcul algorithmique.

A l'aide du filtre couleur 60 illustré par la figure 2, il est possible de prendre des photos en noir et blanc, lorsque par exemple la luminosité est tellement restreinte qu'il est impossible d'envisager la prise d'une photo en couleur, en n'utilisant qu'une deuxième colonne 612 de pixels blancs W centrés sur la ligne d'arrivée. Le filtre 60 permet de définir toutefois différents motifs permettant de s'adapter graduellement à différentes vitesses de défilement, conditionnant la fréquence de prises de vue et par conséquent le temps d'exposition, et plus exactement quatre motifs de base déterminant des sensibilités différentes, s'étendant sur un nombre de colonnes compris entre 1 et 3 et comprenant respectivement, 0,1 ou 2 deuxièmes colonnes de pixels blancs W.

Les quatre motifs de base M1,M2,M3 et M4 contiennent ici un nombre de pixels qui est un multiple de trois, correspondant aux trois pixels de couleur respectivement rouge R, bleu B et vert G et qui sont systématiquement utilisés. Ainsi chacun de ces motifs s'étend sur une hauteur L de trois pixels 3, tandis que la largeur, égale au nombre de pixels, est variable; le paramétrage de la largeur du motif influence la résolution et parallèlement la sensibilité du capteur. Le détail de chacun des quatre motifs préférentiels illustrés est donné ci-dessous:
- le premier motif de base M1 est constitué d'exactement trois pixels, et correspond à la séquence de base A d'un pixel rouge R, un pixel vert G et un pixel bleu B La première largeur N1 du premier motif M1 est donc égale à 1 pixel, c'est-à-dire que ce premier motif M1 ne s'étend que sur une seule colonne;
- le deuxième motif de base M2 est constitué d'une matrice de 2*3 = 6 pixels contenant la même séquence de base A, d'un pixel rouge R, un pixel vert G et un pixel bleu B, à laquelle a été adjointe une série de 3 pixels blancs W. La deuxième largeur N2 du deuxième motif M2 est donc égale à 2 pixels, c'est-à-dire que ce deuxième motif M2 s'étend sur deux colonnes à savoir une première colonne 611 de pixels de couleur et une deuxième colonne 612 de pixels blancs W;

- le troisième motif de base M3 est constitué d'une matrice de 3*3 = 9 pixels contenant deux fois trois pixels rouge R, un pixel vert G et un pixel bleu B sur deux premières colonnes 611 adjacentes, et une série de 3 pixels blancs W d'une deuxième colonne 612 intercalée. La troisième largeur N3 du troisième motif M3 est donc égale à 3 pixels, c'est-à-dire que ce deuxième motif M3 s'étend sur trois colonnes, à savoir deux premières colonnes 611 de pixels de couleur et une deuxième colonne 612 de pixels blancs W;
- le quatrième motif de base M4 est également constitué d'une matrice de 3*3 = 9 pixels, mais contenant seulement une séquence de base A de trois pixels: un rouge R, un pixel vert G et un pixel bleu B sur une première colonnes 611, et cette fois-ci deux séries de 3 pixels blancs W de deux deuxièmes colonnes 612 adjacentes. La quatrième largeur N4 du quatrième motif de M4 est donc toujours égale à 3 pixels.

Les propriétés optiques obtenues à l'aide de chaque motif de base sont conditionnés, entre autres, par les 3 paramètres suivants:
- la sensibilité S, qui est modélisée, dans cadre de la présente invention, comme correspondant à la quantité de lumière moyenne par pixel, avec une quantité de 20% disponible par pixel bleu B, 30% par pixel rouge R, 50% par pixel vert G et 100% par pixel blanc W. Ce paramètre est donc fortement influencé d'une part par le nombre de pixels blancs W, et d'autre part par le nombre de pixels respectifs P1,P2,P3,P4, de chaque motif M1-M4, par lequel la sensibilité globale sur l'ensemble des pixels du filtre est divisée. Les sensibilités extrêmes sont par conséquent celle du premier motif de base M1 (la moins bonne) et celle du quatrième motif de base (la meilleure);
- la qualité couleur Q, qui est modélisée dans le cadre de l'invention comme inversement proportionnelle au nombre de lignes du motif, nécessaires à l'obtention du calcul de la couleur de chaque pixel par des algorithmes de traitement d'image. Pour les différents motifs de base utilisés, on voit que la meilleure qualité couleur Q est fixe car la hauteur de chaque motif de base M1 à M4 est toujours égale à 3 pixels;
- et la résolution N, qui est modélisée comme étant égale au nombre de colonnes N de chaque motif de base. Ainsi la résolution sera d'autant meilleure au niveau d'une ligne d'arrivée 2 que le nombre respectifs de colonnes N1-N4 de chaque motif de base est restreint. Ainsi la meilleure résolution sera procurée par le premier motif de base M1, tandis qu'elle sera la moins bonne pour les troisièmes et quatrième motifs de base M3,M4.

Pour évaluer globalement les performances optiques de chaque motif, on pourra de préférence multiplier les scores obtenus pour chacun des paramètres S de sensibilité, Q de qualité couleur, et N de résolution ci-dessus; toutefois le choix du motif pourra être effectué en tenant compte d'une pondération éventuelle, notamment sur le paramètre de sensibilité S. La valeur du paramètre Q étant de préférence fixée, on cherchera donc de préférence le meilleur compromis entre les paramètres S de sensibilité et N de résolution.

On peut constater que sur les quatre motifs illustrés, au moins trois motifs de base comprennent un nombre différent de pixels blancs W, à savoir 0,3 ou 6 (correspondant respectivement au premier motif de base M1, aux deuxièmes et troisièmes motifs de base M2-M3, et enfin au quatrième motif de base M4). Ceci permet d'ajuster la sensibilité à au moins trois niveaux distincts (fort-moyen-faible). Par ailleurs, le fait que le ratio entre les pixels blancs et les pixels de couleurs puisse être respectivement de 0% (pour le premier motif de base M1), 33% (pour le troisième motif de base M3), 50% (pour le deuxième motif de base M2), et 66% (pour le quatrième motif de base M4) permet d'affiner encore la granularité et le panel des choix d'ajustements possibles pour ce paramètre de sensibilité S, permettant ainsi de s'adapter à un grand nombre de type de courses et de conditions météos possibles, incluant typiquement un temps clair, un temps voilé, un temps très nuageux et des conditions nocturnes. Enfin, le fait que chacun des motifs de base M1-M4 s'étende au plus sur 3 colonnes permet de maintenir une résolution N correcte pour l'image obtenue.

Au bas de la figure 2 sont référencés divers ensembles de colonnes qui peuvent être choisies en fonction du motif de base sélectionné relativement aux conditions de course, c'est-à-dire notamment la luminosité et le type de course conditionnant entre autres la vitesse de défilement des concurrents au niveau de la ligne d'arrivée. On distingue ainsi:
- un premier ensemble de colonnes C1 correspondant au premier motif de base M1 formé d'une seule colonne. Seules trois différentes possibilités équivalentes sont illustrées sur la figure 2 pour des questions de lisibilité, mais on comprendra qu'il est possible d'utiliser n'importe quelle première colonne 611 de pixels de couleur;
- un deuxième ensemble de colonnes C2 correspondant au deuxième motif de base M2, formés de deux colonnes, que l'on peut choisir indifféremment sur l'intégralité du capteur. Pour des questions de lisibilité, seules cinq possibilités équivalentes n'ont néanmoins été représentées sur la figure 2;
- un troisième ensemble de colonnes C3 correspondant au troisième motif de base M3, formé de 3 colonnes, dont deux colonnes de pixels couleur (i.e. premières colonnes 611) et une colonne de pixels blancs W (i.e. une deuxième colonne 612). Ici encore, bien que seules deux possibilités équivalentes n'aient été représentées pour un sous-ensemble de 6 colonnes du filtre couleur 60, on comprendra que l'on peut choisir indifféremment un tel agencement de deux colonnes de pixel couleur avec une colonne de pixels blancs intercalée n'importe où sur la matrice de pixels du filtre couleur 60;
- un quatrième ensemble de colonnes C4 correspondant au quatrième motif de base M4, formé également de 3 colonnes, mais dont cette fois-ci deux colonnes de pixels blancs W (i.e. des deuxièmes colonnes 612) pour une seule colonne de pixels couleur (i.e. première colonnes 611). Il s'agit en quelque sorte d'un ensemble complémentaire au troisième ensemble de colonnes C3, les proportions de colonnes couleur et de colonnes blanches étant inversées. Ici encore, bien que seules deux possibilités équivalentes n'aient été représentées pour un sous-ensemble de 6 colonnes du filtre couleur 60, on comprendra que l'on peut choisir indifféremment un tel agencement de deux colonnes de pixels blancs W avec une colonne de pixels de couleur intercalée n'importe où sur la matrice de pixels du filtre couleur 60.

On peut par conséquent constater d'une part que la détermination du nombre de colonnes N1-N4 correspondant à chaque motif de base M1-M4 ne permet pas systématiquement de sélectionner automatiquement le bon ensemble de colonnes C1-C4 qui doit être aligné sur la ligne d'arrivée 2 pour offrir les propriétés optiques souhaitées. Par exemple, les troisième et quatrième motifs de base M3 et M4 s'étendent sur un nombre identique de 3 colonnes (i.e. on a N3=N4=3) mais présentent des propriétés optiques différentes. Dans ce cas, une manipulation logicielle de décalage peut s'avérer nécessaire, comme expliqué ci-dessous à l'aide de la figure 3 qui illustre une séquence d'étapes de réglage d'une caméra photofinish 3 selon un mode de réalisation préférentiel de l'invention, et plus particulièrement focalisé sur les motifs de base du filtre illustrés sur la figure 2.

Sur le schéma de la figure 3, la première étape E1 consiste à choisir un motif de base présentant des propriétés optiques de sensibilité S, de qualité couleur Q et de résolution N prédéfinies en fonction de paramètres de course telles que les conditions météorologiques et le type de course (la vitesse de défilement du nombre de lignes de pixels par seconde pouvant varier de 1000 lignes par secondes pour de l'athlétisme à plus de 10000 lignes par seconde pour des courses automobiles, la vitesse pour des courses cyclistes et de chevaux étant de l'ordre de 3000 lignes par seconde). Selon le mode de réalisation préférentiel utilisant le filtre couleur de la figure 2, le paramètre de qualité couleur est fixé car tous les motifs de base ont une hauteur L de 3 pixels.

Lors de la deuxième étape E2, on détermine un nombre de colonnes N correspondant au motif choisi, et sélectionne par logiciel un nombre correspondant de colonnes adjacentes sur la matrice. Pour le premier motif de base M1 on sélectionnera donc un premier nombre N1 d'une seule colonne, pour le deuxième motif de base M2 on sélectionnera un deuxième nombre N2 de deux colonnes adjacentes, et pour les troisième et quatrième motifs M3 et M4 on sélectionnera 3 colonnes adjacentes (les troisième et quatrième nombres N3 et N4 étant égaux, chacun respectivement à 3).

Ensuite, une troisième étape E3 de centrage de l'ensemble de colonnes adjacentes obtenu sur la ligne d'arrivée 2 est effectuée. Selon un mode de réalisation préférentiel, on privilégiera la seule manipulation logicielle, de telle sorte qu'aucun mouvement physique de la caméra photo-finish 3, relativement fastidieux, ne soit plus jamais requis une fois qu'elle a été installée. A titre alternatif, on pourra déplacer physiquement la caméra en utilisant des algorithmes de cinématique inverse pour optimiser la manipulation et minimiser l'amplitude des mouvements selon les différents degrés de libertés parmi les trois axes de rotation R1,R2, R3 et le degrés de liberté en translation T1. Afin de faciliter cette étape de centrage, qu'elle est effectuée par logiciel uniquement ou non, on pourra utiliser l'aide d'un réticule auxiliaire, comme dans la solution proposée dans le brevet EP0898249. Lorsque le nombre de colonnes est impair, on aligne la colonne centrale sur la ligne d'arrivée 2; lorsque le nombre de colonnes est pair, l'opération est légèrement plus délicate car il s'agit en théorie de placer le réticule entre deux colonnes adjacentes. Lorsqu'un réticule auxiliaire est utilisé, on pourra considérer en pratique que la troisième étape E3 de centrage est terminée lorsque le réticule est aligné sur l'une des colonnes de l'ensemble des colonnes sélectionné.

On pourra toutefois remarquer que lorsque le nombre de colonnes du motif choisi est impair, le centrage d'un ensemble de colonnes adjacentes égal à la largeur de pixels du motif ne garantit pas nécessairement que le bon ensemble de colonnes, ici les troisièmes et quatrième ensemble de colonnes C3 et C4 pour les motifs M3 et respectivement M4, aient été choisis. En effet, en choisissant n'importe quelle colonne de pixels de la matrice du filtre, la probabilité de sélectionner une première colonne 611 de pixels couleurs est identique à celle de sélectionner une deuxième colonne 612 de pixels blancs W, et de même, en choisissant un ensemble de trois colonnes adjacentes de pixels, il est équiprobable que l'ensemble contienne une seule colonne de pixels blanc W sur les trois colonnes ou 2 colonnes de pixels blancs. Dans ce cas, une quatrième étape E4, subsidiaire et utilisée seulement pour un nombre N de colonnes impair (c'est-à-dire égal à 2P+1, P correspondant à une modélisation mathématique du diviseur du nombre pair immédiatement inférieur), consiste à décaler l'ensemble de colonne adjacentes aligné sur la ligne d'arrivée d'un seul pixel, c'est-à-dire l'équivalent d'une colonne, vers la gauche ou vers la droite. Il est en effet aisé de constater que si une colonne de pixels blancs W (i.e. une deuxième colonne 612) est alignée sur la ligne d'arrivée, il suffira de décaler le réticule sur la colonne immédiatement sur sa gauche ou sur sa droite pour être centré sur une première colonne 611 de pixels de couleur où l'on trouve le premier motif de base M1 lors de la troisième étape de centrage E3 pour un premier ensemble de colonne C1 qui n'en comprend qu'une seule. Ainsi similairement, le fait de décaler un ensemble de trois colonnes adjacentes d'un pixel vers la droite ou vers la gauche fait passer alternativement du troisième ensemble de colonnes C3, correspondant au troisième motif M3 avec 2 colonnes de pixels couleur, au quatrième ensemble de colonnes C4, correspondant au quatrième motif M4 qui n'en contient plus qu'une seule pour deux colonnes de pixels blancs W. Lorsque le nombre N de colonnes est pair par contre, c'est-à-dire égal à 2P, la quatrième étape n'est jamais nécessaire.

Par conséquent, en utilisant le procédé de réglage décrit à la figure 3 pour un filtre couleur 60 présentant l'agencement de premières colonnes 611 de pixels couleur, avec motifs de base R,G,B, décalés, entrelacées de deuxièmes colonnes 612 de pixels blancs W, on voit que les manipulations requises pour l'ajustement des propriétés optiques du filtre en fonction des conditions de course sont extrêmement simples. Une fois que la caméra a été installée et que tous ses degrés de libertés ont été définitivement verrouillés, on peut choisir un premier motif déterminant des propriétés optiques correspondant de préférence à des conditions d'utilisation normales, ou statistiquement les plus probables. Ce motif s'étendant sur 1 à 3 colonnes, il suffira ensuite de sélectionner une ou deux colonnes supplémentaires au maximum, ou respectivement d'en supprimer ou désélectionner une ou deux au maximum, puis de décaler, le cas échéant, l'ensemble des colonnes obtenues d'un seul pixel en largeur si le nombre de colonnes est impair. Pour encore faciliter les opérations de centrage, lorsque celles-ci s'effectuent à l'aide d'un réticule auxiliaire comme dans la solution proposée dans le brevet EP0898249 de la demanderesse, on pourra choisir de systématiquement sélectionner, par défaut, la colonne de pixels sur laquelle est alignée le réticule et de la compléter le cas échéant par des colonnes de pixels additionnelles lors de la deuxième étape E2 préalable de sélection logicielle pour un ensemble de colonnes dont le nombre est strictement supérieur à un. Les manipulations restantes pour effectuer le centrage sont alors extrêmement sommaires et permettent donc d'avoir une réactivité maximale, qui est souvent essentielle pour des manifestations se déroulant en extérieur, donc très exposées à des variations de conditions météorologiques, et en temps réel comme par exemple des épreuves d'athlétisme lors de championnats du monde ou de jeux olympiques.

Cette commodité d'usage vaut du reste non seulement pour les réglages initiaux de la caméra photo-finish, mais également pour ajuster dynamiquement les propriétés optiques du filtre couleur 60 en changeant la sélection du motif de base. Le fait de n'avoir qu'au plus 2 colonnes à ajouter - ou respectivement enlever, selon les conditions - et ne devoir effectuer un décalage que d'au plus une colonne de pixels en largeur est d'autant plus appréciable lorsque la durée des épreuves s'étale sur plusieurs périodes de la journée, par exemple des épreuves d'athlétisme pour lesquelles les qualifications se déroulent de jour et les finales souvent tard dans la soirée ou durant la nuit. Ainsi par exemple si le premier motif de base M1 est sélectionné par défaut pour des conditions d'utilisation diurnes, il suffira d'ajouter une deuxième colonne 612 adjacente de pixels blancs W pour obtenir le deuxième motif de base M2, de sensibilité accrue, et encore une autre deuxième colonne 612 de pixels blancs W dans la soirée, de telle sorte les deux deuxièmes colonnes 612 de pixels blancs W soient respectivement situées de part et d'autre de la première colonne 611 de pixels de couleur alignée sur la ligne d'arrivée 2, pour obtenir le quatrième motif de base M4, dont la sensibilité est encore meilleure, lorsque la nuit sera tombée. Et pour ajuster le filtre couleur sur une sensibilité intermédiaire, si besoin, on pourra passer du premier motif de base M1 au troisième motif de base M3, en ajoutant deux colonnes adjacentes, respectivement une deuxième colonnes 612 de pixels blancs W et une première colonne 611 de pixels de couleur du même côté, puis en décalant l'ensemble d'un pixel. Toutes ces opérations de sélection logicielle simples d'ajout et/ou éventuellement de désélection de colonnes de pixels peuvent permettre ainsi de suivre une épreuve tout au long de son déroulement en ajustant du mieux possible et au fur et à mesure les propriétés optiques du filtre optique installé sur la caméra photo-finish 3.

On comprendra toutefois que les motifs de base M1-M4 et la séquence de base A n'ont été donnés qu'à titre d'exemple pour illustrer un mode de réalisation particulièrement préféré. Toutefois, d'autres motifs de base s'étendant sur un nombre plus important de colonnes, ou comprenant une séquence de base A s'étendant sur un plus grand nombre de pixels, ou comprenant d'autres couleurs est également envisageable sans sortir du cadre de l'invention, dans la mesure où les manipulations logicielles de centrage et de décalage demeurent relativement simples. On pourra par exemple notamment envisager des séquences de base alternées en R,G,B, et cyan, magenta, jaune sur deux colonnes successives.

Par ailleurs, sans sortir du cadre de la présente invention, la méthode de réglage d'une caméra photo-finish décrite ci-dessus pourra également choisir de n'utiliser que n'importe quel sous-ensemble de motifs parmi l'ensemble des quatre motifs M1 à M4 ci-dessus, en fonction des conditions d'usage, qui ne nécessitent par exemple de n'utiliser qu'uniquement deux ou trois motifs sur les quatre.

## Revendications

1. Procédé de réglage pour une caméra photo-finish (3), ladite caméra photo-finish (3) comprenant un filtre couleur (60) ainsi qu'un capteur numérique (6) matriciel, ladite caméra photo-finish (3) étant montée rotative autour d'une rotule (8) possédant trois degrés de liberté en rotation (R1,R2,R3), et possédant par ailleurs un degré de liberté en translation (T) dans le sens du déroulement de la course, ledit filtre couleur (60) étant formé d'une matrice bidimensionnelle de pixels, chaque pixel correspondant à une couleur donnée, ladite matrice de pixels étant formée d'une alternance de premières colonnes (611) de pixels de couleur et de deuxièmes colonnes (612) de pixels blancs (W), tel que chaque première colonne (611) de pixels de couleur comprend une séquence de base (A) de pixels répétée sur l'ensemble de ladite première colonne (611) de pixels de couleur, ladite séquence de base (A) de pixels comprenant au moins trois pixels de trois couleurs différentes, et chaque dite séquence de base (A) d'une dite première colonne (611) de pixels en couleur étant décalée en hauteur d'un pixel par rapport à chacune des dites séquences de base (A) des dites premières colonnes (611) de pixels de couleur adjacentes, le filtre (60) permettant de définir différents motifs, le procédé étant **caractérisé en ce qu'**il comprend les étapes suivantes:
- une première étape (E1) de choix d'un motif de base comprenant au moins trois pixels de couleurs différentes et présentant des propriétés optiques de sensibilité (S), de qualité couleur (Q) et de résolution (N) prédéfinies en fonction de paramètres de course, la qualité couleur (Q) étant définie comme une valeur inversement proportionnelle au nombre de lignes du motif de base, la résolution (N) étant définie comme une valeur égale au nombre de colonnes du motif de base;
- une deuxième étape (E2) de sélection logicielle d'un ensemble de colonnes adjacentes dont le nombre correspond à la largeur dudit motif de base choisi;
- une troisième étape (E3) de centrage dudit ensemble de colonnes adjacentes sur la ligne d'arrivée (2).

2. Procédé de réglage selon la revendication 1, **caractérisé en ce que** la séquence de base (A) du filtre couleur (60) est identique pour chaque première colonne (611).

3. Procédé de réglage selon la revendication 2, **caractérisé en ce que** la séquence de base (A) du filtre couleur (60) comprend au moins un pixel bleu (B), un pixel vert (G) et un pixel rouge (R).

4. Procédé de réglage selon l'une des revendications précédentes, **caractérisé en ce que** la séquence de base (A) de pixels du filtre couleur (60) comprend exactement 3 pixels.

5. Procédé de réglage selon l'une des revendications précédentes, ladite première étape (E1) permettant de choisir au moins parmi deux motifs de base de sensibilités (S) différentes.

6. Procédé de réglage selon l'une des revendications précédentes, ladite première étape (E1) permettant de choisir au moins parmi quatre motifs de base de sensibilités (S) différentes, s'étendant sur un nombre de colonnes compris entre 1 et 3.

7. Procédé de réglage selon l'une des revendications précédentes, ladite troisième étape (E3) de centrage étant suivie d'une quatrième étape (E4) subsidiaire de réglage fin consistant en un décalage en largeur dudit ensemble de colonnes adjacentes d'un nombre entier de colonnes de pixels, ladite quatrième étape (E4) n'étant employée que lorsque ledit nombre de colonnes correspondant à la largeur dudit motif de base déterminé à ladite deuxième étape (E2) est impair et strictement supérieur à 1.

8. Procédé de réglage selon la revendication 7, ladite quatrième étape (E4) ne requérant le décalage en largeur dudit ensemble de colonnes de pixels que d'une seule colonne de pixels, dans n'importe quel sens.

9. Procédé de réglage d'une caméra photo-finish (3) selon l'une des revendications précédentes, ladite troisième étape (E3) de centrage, et, le cas échéant, ladite quatrième étape (E4) de décalage, ne consistant qu'en des étapes d'ajustement logiciel.

10. Procédé de réglage d'une caméra photo-finish (3) selon l'une des revendications 5 à 9, le passage d'un ensemble de colonnes prédéfini, correspondant à un motif de base prédéfini, à un autre ensemble de colonnes prédéfini ne nécessitant que l'ajout ou la suppression d'au plus deux colonnes de pixels, et le décalage en largeur que d'une seule colonne de pixels.

## Patentansprüche

1. Einstellverfahren für eine Fotofinish-Kamera (3), wobei die Fotofinish-Kamera (3) einen Farbfilter (60) sowie einen digitalen Matrixsensor (6) umfasst, die Fotofinish-Kamera (3) drehbar um ein Kugelgelenk (8), das drei Rotationsfreiheitsgrade (R1, R2, R3) besitzt, montiert ist und ferner einen Translationsfreiheitsgrad (T) in Richtung des Bahnverlaufs besitzt, wobei der Farbfilter (60) aus einer zweidimensionalen Pixelmatrix gebildet ist, und jedes Pixel einer bestimmten Farbe entspricht, wobei die Pixelmatrix durch abwechselnde erste Spalten (611) von Farbpixeln und zweite Spalten (612) von weißen Pixeln (W) gebildet ist, so dass jede erste Spalte (611) von Farbpixeln eine Basisfolge (A) von Pixeln aufweist, die über die gesamte erste Spalte (611) von Farbpixeln hinweg wiederholt wird, wobei die Basisfolge (A) von Pixeln mindestens drei Pixel mit drei verschiedenen Farben umfasst, und jede Basisfolge (A) einer ersten Spalte (611) von Farbpixeln in Bezug auf jede der Basisfolgen (A) der ersten Spalten (611) von benachbarten Farbpixeln in Höhenrichtung um ein Pixel versetzt ist, wobei das Filter (60) ermöglicht, verschiedene Muster zu definieren, wobei das Verfahren **gekennzeichnet ist durch** die folgenden Schritte:
- einen ersten Schritt (E1) zum Auswählen eines Basismusters, das mindestens drei Pixel mit verschiedenen Farben umfasst und optische Eigenschaften der Empfindlichkeit (S), der Farbqualität (Q) und der Auflösung (N) aufweist, die in Abhängigkeit von Bahnparametern vordefiniert sind, wobei die Farbqualität (Q) als ein Wert definiert ist, der zu der Anzahl von Zeilen des Basismusters umgekehrt proportional ist, und die Auflösung (N) als ein Wert gleich der Anzahl von Spalten des Basismusters definiert ist;
- einen zweiten Schritt (E2) zum Auswählen mittels Software eines Satzes benachbarter Spalten, deren Anzahl der Breite des gewählten Basismusters entspricht;
- einen dritten Schritt (E3) zum Zentrieren des Satzes benachbarter Spalten auf die Ziellinie (2).

2. Einstellverfahren nach Anspruch 1, **dadurch gekennzeichnet, dass** die Basisfolge (A) des Farbfilters (60) für jede erste Spalte (611) gleich ist.

3. Einstellverfahren nach Anspruch 2, **dadurch gekennzeichnet, dass** die Basisfolge (A) des Farbfilters (60) mindestens ein blaues Pixel (B), ein grünes Pixel (G) und ein rotes Pixel (R) umfasst.

4. Einstellverfahren nach einem der vorhergehenden Ansprüche, **dadurch gekennzeichnet, dass** die Basisfolge (A) von Pixeln des Farbfilters (60) genau 3 Pixel umfasst.

5. Einstellverfahren nach einem der vorhergehenden Ansprüche, wobei der erste Schritt (E1) ermöglicht, aus mindestens zwei Basismustern mit unterschiedlichen Empfindlichkeiten (S) auszuwählen.

6. Einstellverfahren nach einem der vorhergehenden Ansprüche, wobei der erste Schritt (E1) ermöglicht, aus mindestens vier Basismustern mit unterschiedlichen Empfindlichkeiten (S), die sich über eine Anzahl von 1 bis 3 Spalten erstrecken, auszuwählen.

7. Einstellverfahren nach einem der vorhergehenden Ansprüche, wobei dem dritten Zentrierungsschritt (E3) ein vierter zusätzlicher Feineinstellschritt (E4) folgt, der ein Versetzen in Breitenrichtung des Satzes benachbarter Spalten um eine ganzzahlige Anzahl von Pixelspalten macht, und der vierte Schritt (E4) nur ausgeführt wird, wenn die Anzahl von Spalten, die der Breite des im zweiten Schritt (E2) bestimmten Basismusters entspricht, ungerade und absolut größer als 1 ist.

8. Einstellverfahren nach Anspruch 7, wobei der vierte Schritt (E4) das Versetzen in Breitenrichtung des Satzes von Pixelspalten nur um eine einzige Pixelspalte in einem beliebigen Richtungssinn erfordert.

9. Einstellverfahren für eine Fotofinish-Kamera (3) nach einem der vorhergehenden Ansprüche, wobei der dritte Zentrierungsschritt (E3) und gegebenenfalls der vierte Versatzschritt (E4) nur aus Software-Einstellschritten bestehen.

10. Einstellverfahren für eine Fotofinish-Kamera (3) nach einem der Ansprüche 5 bis 9, wobei der Übergang von einem vordefinierten Satz von Spalten, der einem vordefiniertem Basismuster entspricht, zu einem anderen vordefinierten Satz von Spalten nur das Hinzufügen oder Entfernen von höchstens zwei Pixelspalten und das Versetzen in Breitenrichtung nur einer einzigen Pixelspalte erfordert.

## Claims

1. Method of adjusting a photo finish camera (3), said photo finish camera (3) including a colour filter (60) and a digital array sensor (6), said photo finish camera (3) being mounted to rotate about a ball and socket joint (8) possessing three degrees of freedom in rotation (R1, R2, R3) and also possessing one degree of freedom in translation (T) in the direction of the race, said colour filter (60) being formed of a two-dimensional pixel array, each pixel corresponding to a given colour, said pixel array being formed by alternating first columns (611) of coloured pixels and second columns (612) of white pixels (W), **characterised in that** each first column (611) of coloured pixels includes a basic sequence (A) of pixels repeated over the entire first column (611) of coloured pixels, said basic sequence (A) of pixels including at least three pixels of three different colours, and each said basic sequence (A) of a first said column (611) of coloured pixels being offset in height by one pixel relative to each of said basic sequences (A) of said adjacent first columns (611) of coloured pixels, the filter (60) allowing different patterns to be defined, the method being **characterised in that** it includes the following steps:
- a first step (E1) of selecting a basic pattern including at least three pixels of different colours and having optical properties of sensitivity (S), of colour quality (Q) and of resolution (N) which are predefined according to race parameters, the colour quality (Q) being defined as a value that is inversely proportional to the number of rows of the basic pattern, the resolution (N) being defined as a value equal to the number of columns of the basic pattern;
- a second step (E2) of software selection of a set of adjacent columns whose number corresponds to the width of said selected basic pattern;
- a third step (E3) of centring said set of adjacent columns on the finish line (2).

2. Method of adjustment according to claim 1, **characterised in that** the basic sequence (A) of the colour filter (60) is identical for each first column (611).

3. Method of adjustment according to claim 2, **characterised in that** the basic sequence (A) of the colour filter (60) includes at least one blue pixel (B), one green pixel (G) and one red pixel (R).

4. Method of adjustment according to any of the preceding claims, **characterised in that** the basic sequence (A) of pixels of the colour filter (60) includes exactly three pixels.

5. Method of adjustment according to any of the preceding claims, wherein said first step (E1) allows a choice to be made between at least two basic patterns of different sensitivities (S).

6. Method of adjustment according to any of the preceding claims, wherein said first step (E1) allows a choice to be made between at least four basic patterns of different sensitivities (S), extending over a number of columns comprised between one and three.

7. Method of adjustment according to any of the preceding claims, wherein said third centring step (E3) is followed by a subsidiary fourth step (E4) of fine adjustment, consisting in offsetting the width of said set of adjacent columns by an integer number of columns of pixels, wherein said fourth step (E4) is only employed when said number of columns corresponding to the width of said basic pattern determined in said second step (E2) is an odd number strictly greater than 1.

8. Method of adjustment according to claim 7, wherein said fourth step (E4) requires the width of said set of columns of pixels to be offset by only one column of pixels, in any direction.

9. Method of adjusting a photo finish camera (3) according to any of the preceding claims, said third centring step (E3), and, where necessary, said fourth offsetting step (E4), consisting only of software adjustment steps.

10. Method of adjusting a photo finish camera (3) according to any of claims 5 to 9, wherein the change from one predefined set of columns, corresponding to a predefined basic pattern, to another predefined set of columns, requires simply adding or removing no more than two columns of pixels, and offsetting the width of only one column of pixels.
